# EUROPÄISCHE PATENTSCHRIFT

(11) **EP 2 824 300 B1**
(45) Veröffentlichungstag und Bekanntmachung des Hinweises auf die Patenterteilung: **28.06.2017**
(21) Anmeldenummer: 14175149.5
(22) Anmeldetag: 01.07.2014
(51) Int. Cl.: F01N 5/02, F02G 5/00

(54) **Antriebseinheit für ein Kraftfahrzeug**
Drive unit for a motor vehicle
Unité d'entraînement pour un véhicule automobile

(30) Priorität: 09.07.2013 DE 102013011521
(43) Veröffentlichungstag der Anmeldung: 14.01.2015
(73) Patentinhaber: Volkswagen Aktiengesellschaft, 38440 Wolfsburg (DE)
(72) Erfinder: Carstensen, Asmus, 38557 Osloss (DE); Dallmann, Marcus, 38527 Meine (DE); Fritzsche, Jörg, 38518 Gifhorn (DE); Herr, Andreas, 38442 Wolfsburg (DE); Käppner, Christoph, 38118 Braunschweig (DE); Schulenburg, Thomas, 38550 Isenbüttel (DE); Semke, Artur, 38446 Wolfsburg (DE); Volkmann, Jörg, 38459 Bahrdorf (DE)
(74) Vertreter: Bungartz, Florian

(56) Entgegenhaltungen:
- EP-A2- 2 525 052
- DE-A1- 10 259 488
- DE-A1-102008 019 159
- DE-A1-102008 027 171
- DE-A1-102009 022 062
- DE-A1-102010 042 401
- US-A1- 2007 126 236
- US-A1- 2012 000 201

## Beschreibung

Die Erfindung betrifft eine Antriebseinheit für ein Kraftfahrzeug.

Kraftfahrzeuge werden derzeit regelmäßig mittels Brennkraftmaschinen angetrieben, in denen Kraftstoffe verbrannt und die dabei freigesetzte Wärmeenergie teilweise in mechanische Arbeit umgewandelt wird. Der Wirkungsgrad von Hubkolben-Brennkraftmaschinen, die nahezu ausschließlich für den Antrieb von Kraftfahrzeugen eingesetzten werden, liegt bei ca. einem Drittel der eingesetzten Primärenergie. Demnach stellt zwei Drittel der bei der Verbrennung freigesetzten Wärmeenergie Abwärme dar, die entweder über die Motorkühlung oder den Abgasstrang als Verlustwärme an die Umgebung abgegeben wird.

Eine Nutzung dieser Abwärme stellt eine Möglichkeit dar, den Gesamtwirkungsgrad einer Antriebseinheit des Kraftfahrzeugs zu steigern und damit den Kraftstoffverbrauch zu senken.

Die DE 10 2008 028 467 A1 beschreibt eine Vorrichtung zur Nutzung von Abwärme einer Brennkraftmaschine. Dazu ist in den Abgasstrang der Brennkraftmaschine ein erster Wärmetauscher, der Verdampfer, einer Dampfkreisprozessvorrichtung integriert. Die in dem Wärmetauscher von dem Abgas auf ein Arbeitsmedium der Dampfkreisprozessvorrichtung übertragene Wärmeenergie wird in einer Expansionsvorrichtung der Dampfkreisprozessvorrichtung teilweise in mechanische Energie umgewandelt, die beispielsweise zur Unterstützung des Antriebs eines Kraftfahrzeugs oder zur Erzeugung elektrischer Energie genutzt werden kann. Stromab der Expansionsvorrichtung wird das Arbeitsmedium in einem zweiten Wärmetauscher, dem Kondensator, abgekühlt, wobei es kondensiert. Über eine Speisepumpe erfolgt eine Druckerhöhung des Arbeitsmediums und dessen Zufuhr zu dem Verdampfer.

Der Kondensator wird von dem Kühlmittel eines Motorkühlkreislaufs eines Verbrennungsmotors der Brennkraftmaschine gekühlt. Der Rücklauf des Kühlmittels von dem Kondensator ist mittels eines 3-Wege-Ventils so schaltbar, dass das Kühlmittel entweder direkt vor einem Hauptkühler oder direkt vor der Verbrennungskraftmaschine in den Motorkühlkreis eingeleitet wird. Dies ermöglicht, in einer Warmlaufphase der Brennkraftmaschine die Abwärme, die das Kühlmittel in dem Kondensator aufnimmt, zur schnelleren Aufwärmung des Kühlmittels zu nutzen. Dabei ist in bekannter Weise vorgesehen, den Hauptkühler durch einen Bypass zu umgehen, um eine in der Warmlaufphase ungewünschte Kühlung des Kühlmittels zu vermeiden. Durch die Nutzung der in dem Kondensator anfallenden Abwärme erreicht die Brennkraftmaschine schneller ihre Betriebstemperatur, was folglich mit einem geringen Kraftstoffverbrauch und Schadstoffausstoß während der Warmlaufphase verbunden ist. Nach dem Erreichen der Betriebstemperatur kann das durch den Kondensator aufgewärmte Kühlmittel direkt vor dem Hauptkühler in den Motorkühlkreis eingeleitet werden. Dadurch kann verhindert werden, dass die Abwärme aus dem Kondensator die Kühlleistung für die Verbrennungskraftmaschine vermindert. Andererseits kann aber auch vorgesehen sein, das aus dem Kondensator austretende Kühlmittel auch nach dem Erreichen der Betriebstemperatur direkt vor dem Verbrennungsmotor in den Motorkühlkreis einzuleiten. Dies kann vorteilhaft sein, wenn die Motoraustrittstemperatur des Kühlmittels unter einen Sollwert abfällt, was beispielsweise bei längerer Bergabfahrt des Kraftfahrzeugs der Fall sein kann. Zusätzlich kann dann auch die Heizleistung einer Innenraumheizung, die auf einem Wärmetausch mit dem Motorkühlkreis beruht, verbessert werden.

Aus der DE 10 2008 019 159 A1 ist zudem bekannt, bei einem Kraftfahrzeug, in dessen Antriebsstrang eine Dampfkreisprozessvorrichtung zur Abgasabwärmenutzung integriert ist und das zudem ein Navigationssystem aufweist, die mittels des Navigationssystems festgestellte Position des Fahrzeugs und den vorausberechneten Streckenverlauf zur wirtschaftlicheren Steuerung des Dampfkreisprozesses auszuwerten.

Weiterhin ist es bekannt, einen Wärmespeicher, insbesondere Latent- oder chemischen Wärmespeicher in den Motorkühlkreislauf zu intergieren (vgl. z.B. DE 10 2008 013 650 A1). Der Wärmespeicher nimmt im Betrieb der Brennkraftmaschine nach dem Erreichen der Betriebstemperatur Wärme aus dem Abgas auf und speichert diese zwischen. Nach einem darauffolgenden Kaltstart der Brennkraftmaschinen gibt der Wärmespeicher die gespeicherte Wärme in den Motorkühlkreis ab, wodurch die Warmlaufphase für die Brennkraftmaschine verkürzt wird.

Bekannt ist auch, beide Maßnahmen kombiniert bei einer Brennkraftmaschine einzusetzen, wobei keine Wechselwirkung zwischen dem Dampfkreisprozess und dem Wärmespeicher vorgesehen ist. Der Wärmespeicher ist dabei eine reine Kaltstartmaßnahme, während der Dampfkreisprozess erst nach dem Erreichen der Betriebstemperatur wirksam wird. Nachteilig bei diesen Systemen ist, dass sowohl der Verdampfer als auch der Wärmespeicher in den Abgasstrang integriert sind und mittels jeweils eines Bypasses umgehbar gemacht werden müssen, um zumindest bei ihrer Nichtnutzung die Erhöhung des Abgasgegendrucks, den der Verdampfer und der Wärmespeicher bei ihrer Umströmung durch das Abgas erzeugen, zu vermeiden. Dieser Nachteil kann gemäß der EP 2 525 052 A2 dadurch vermieden werden, dass der Wärmespeicher nicht in den Abgasstrang sondern in den Medienkreis der Kreisprozessvorrichtung (umgehbar) integriert ist, so dass dieser im Nichtbetrieb des Kreisprozesses das Arbeitsmedium der Kreisprozessvorrichtung als Transfermedium nutzt, um die zuvor gespeicherte Wärmeenergie über die jeweiligen Wärmetauscher auf entweder das Abgas oder die Kühlflüssigkeit eines Motorkühlkreislaufs zu übertragen.

Eine alternative Kombination eines Dampfkreisprozess zur Abwärmenutzung aus dem Abgas und eines Wärmespeicher ist aus der DE 10 2007 033 611 A1 bekannt. Dort ist vorgesehen, in Betriebszuständen des Verbrennungsmotors, wenn die in dem Abgas enthaltene Wärmeenergie größer ist als die Wärmeenergie, die in dem Verdampfer auf das Arbeitsmedium maximal übertragbar ist, mittels entsprechend ausgebildeter Bypässe und Ventile einen Teil des Abgasstroms in den Wärmespeicher umzuleiten, um diesen "aufzuladen", sofern er nicht bereits vollständig "aufgeladen" ist. Andererseits ist vorgesehen, in Betriebszuständen des Verbrennungsmotors, wenn das Wärmeenergieangebot des Abgases unterhalb einer Mindestschwelle liegt, die für einen Betrieb des Dampfkreisprozesses erforderlich ist, das Abgas vorab durch den Wärmespeicher zu führen, um dieses zusätzlich zu erwärmen. Damit dadurch nicht eine unzulässige Abkühlung von Abgasnachbehandlungsvorrichtungen des Abgasstrangs verbunden ist, sind sowohl der Wärmespeicher als auch der Verdampfer stromab dieser Abgasnachbehandlungsvorrichtungen in den Abgasstrang integriert.

Eine dazu funktional ähnliche Brennkraftmaschine mit einer Dampfkreisprozessvorrichtung ist aus der DE 10 2009 035 522 A1 bekannt. Dort ist in die Dampfkreisprozessvorrichtung ein Dampfspeicher integriert, in dem Dampf in Zeiten, in denen dieser erzeugt aber nicht genutzt werden kann, zwischengespeichert wird. Der gespeicherte Dampf wird dem Dampfkreisprozess wieder zugeführt, wenn mehr Dampf umgesetzt werden kann, als durch Nutzung von Abgasabwärme erzeugt werden kann.

Eine weitere alternative Kombination eines Dampfkreisprozess zur Abwärmenutzung aus dem Abgas und eines Wärmespeichers ist aus der DE 10 2011 076 054 A1 bekannt. Dabei ist vorgesehen, den Wärmespeicher in den Dampfkreis zu integrieren und von dem Arbeitsmedium des Dampfkreises beaufschlagen zu lassen. Dazu ist vorgesehen, einen Vorlauf zu dem Wärmespeicher zwischen dem Verdampfer und der Expansionsvorrichtung und einen Rücklauf zwischen der Expansionsvorrichtung und dem Kondensator in den Dampfkreis zu integrieren. Grundsätzlich soll dadurch die Wärme, die der Wärmespeicher nach einem Kaltstart der Brennkraftmaschine auf das Arbeitsmedium überträgt, in dem Verdampfer auf das Abgas übertragen werden, wodurch die Aufheizzeit für in dem Abgasstrang stromab des Verdampfers angeordnete Abgasnachbehandlungsvorrichtungen verkürzt werden kann. Weiterhin ist in der DE 10 2011 076 054 A1 offenbart, dass alternativ oder zusätzlich zu dem Aufwärmen des Abgases in der Warmlaufphase auch vorgesehen sein kann, dass die Abwärme aus dem Kondensator die Warmlaufphase der Brennkraftmaschine verkürzt, indem der Kondensator von dem Kühlmittel des Motorkühlkreises gekühlt wird. Bei einer derartigen Nutzung des Arbeitsmediums kann auch vorgesehen sein, mittels einer Druckeinstelleinrichtung den Druck des Arbeitsmediums derart einzustellen, dass die Dampfphase temporär eliminiert wird und das Arbeitsmedium im gesamten Kreislauf in flüssiger Form zirkuliert.

Ausgehend von diesem Stand der Technik lag der Erfindung die Aufgabe zugrunde, eine Ausgestaltung einer Antriebseinheit für ein Kraftfahrzeug anzugeben, die vorteilhaft eine kombinierte Nutzung der Wärmeenergie des Abgases einer Brennkraftmaschine durch einerseits einen rechtsläufigen Kreisprozess und andererseits durch einen Wärmespeicher ermöglicht.

Diese Aufgabe wird durch eine Antriebseinheit gemäß dem unabhängigen Patentanspruch gelöst. Vorteilhafte Ausgestaltungen davon sind Gegenstand der abhängigen Patentansprüche und ergeben sich aus der nachfolgenden Beschreibung der Erfindung.

Der Erfindung liegt die Erkenntnis zugrunde, dass eine Kombination eines rechtsläufigen Kreisprozesses und eines Wärmspeichers vorteilhafte Möglichkeiten für das Thermomanagement der Antriebseinheit bietet, gleichzeitig die Kreisprozessvorrichtung und der Wärmespeicher jedoch in Abhängigkeit von dem Abgasabwärmeangebot in Konkurrenz stehen können.

Grundgedanke der Erfindung ist daher, diese mögliche Konkurrenzsituation dadurch zu vermeiden, dass ein prognostiziertes zukünftiges Fahrtprofil in die Steuerung des Abwärmeenergiestroms in den Dampfkreisprozess oder den Wärmespeicher oder beides einfließen zu lassen, wodurch eine möglichst optimale Nutzung der zur Verfügung stehenden Wärmeenergie erreicht werden kann.

Eine gattungsgemäße Antriebseinheit für ein Kraftfahrzeug umfasst
- eine Brennkraftmaschine, die einen Verbrennungsmotor sowie einen Abgasstrang, über den Abgas aus dem Verbrennungsmotor abführbar ist, aufweist,
- eine Kreisprozessvorrichtung, die zur Wandlung von Wärmeenergie aus dem Abgas in einem rechtsläufigen thermodynamischen Kreisprozess in mechanische Arbeit einsetzbar ist, wobei der Kreisprozess
   - einen (direkten oder indirekten) Wärmeübergang von dem Abgas auf ein Arbeitsmedium in einer ersten Wärmetauschvorrichtung umfasst, wodurch die Temperatur und/oder der Druck des Arbeitsmediums erhöht wird,
   - eine Expansion des Arbeitsmediums in einer Expansionsvorrichtung zur Erzeugung der mechanischen Arbeit umfasst, und
   - einen Wärmeübergang von dem Arbeitsmedium auf ein Kühlmittel in einer zweiten Wärmetauschvorrichtung umfasst,
- einen Wärmespeicher, der zur Aufnahme von Wärmenergie des Abgases und zur bedarfsweisen Abgabe der Wärmeenergie dient.

Gemäß dem Grundgedanken der Erfindung ist die gattungsgemäße Antriebseinheit dadurch weitergebildet, dass eine Vorrichtung zur Prognostizierung eines zukünftig (insbesondere direkt anschließend bzw. als nächstes) zu fahrenden Fahrtprofils vorgesehen ist, wobei eine Steuerung einer Wärmeabgabe von dem Wärmespeicher in Abhängigkeit von dem prognostizierten Fahrtprofil erfolgt.

Dabei ist vorgesehen, dass der Wärmespeicher in die Kreisprozessvorrichtung integriert ist und somit die Wärme (direkt oder indirekt) an das Arbeitsmedium der Kreisprozessvorrichtung abgibt. Dadurch kann zum einen eine Anordnung des Wärmespeichers in dem Abgasstrang derart, dass dieser von dem Abgas umströmt wird, vermieden werden. Somit kann eine dadurch begründete Erhöhung des Abgasgegendrucks vermieden werden. Zudem kann die von dem Wärmespeicher abgegebene Wärme auch vorteilhaft genutzt werden, um die Warmlaufphase der Brennkraftmaschine zu verkürzen.

Weiterhin ist die Integration des Wärmespeichers in die Kreisprozessvorrichtung derart vorgesehen, dass der Wärmeübergang von dem Wärmespeicher auf das Arbeitsmedium in oder stromauf der ersten Wärmetauschvorrichtung (und stromab der zweiten Wärmetauschvorrichtung) erfolgt. Durch diese Ausgestaltung der Antriebseinheit wird ermöglicht, die in dem Wärmespeicher gespeicherte Wärmeenergie, beispielsweise nach einem Kaltstart der Brennkraftmaschine und/oder während eines Betriebs der Brennkraftmaschine mit geringer Last, was regelmäßig mit entsprechend geringen Abgastemperaturen verbunden ist, in den Kreisprozess zu überführen und dadurch den Kreisprozess zu unterstützen, der ansonsten gegebenenfalls wegen zu geringer Wärmeaufnahme aus dem Abgas (noch) nicht ausführbar wäre.

Vorzugsweise kann vorgesehen sein, dass auch eine Steuerung des Wärmeübergangs auf die Kreisprozessvorrichtung und/oder den Wärmespeicher und/oder in Abhängigkeit von dem prognostizierten Fahrtprofil erfolgt.

Vorzugsweise kann vorgesehen sein, dass die Vorrichtung zur Prognostizierung ein Navigationssystem umfasst. Ein Navigationssystem umfasst eine insbesondere satellitengestützte Vorrichtung zur Positionserkennung sowie auswertbare geographische Kartendaten. Derartige Kartendaten können dabei nicht nur Informationen zum Verlauf von Strecken umfassen, sondern insbesondere auch Informationen zu der Art der jeweiligen Streckenabschnitte (Autobahn, Landstraße, Stadtstraße, etc.) sowie zu den dort herrschenden Geschwindigkeitsbeschränkungen. Auch können topographische Daten enthalten sein, die insbesondere eine Ermittlung der Steigung oder des Gefälles der Streckenabschnitte ermöglichen. Diese Daten können, insbesondere in Kombination mit dem derzeitigen Fahrverhalten (z.B. aktuelle Geschwindigkeit, Durchschnittsgeschwindigkeit, jeweils insgesamt und auf den unterschiedlichen Straßenarten) ausgewertet werden und dadurch der zukünftige Lastzustand der Brennkraftmaschine über der Zeit und somit das entsprechende Abwärmeangebot prognostiziert werden. Dieses kann dann möglichst optimal ausgenutzt werden, indem z.B. nur der Kreisprozessvorrichtung, nur dem Wärmespeicher oder, z.B. bei derzeitigem und voraussichtlich weiter andauerndem Betrieb der Brennkraftmaschine mit hoher oder Volllast, beiden Komponenten Abwärme zugeführt wird. Auch kann in Abhängigkeit des prognostizierten Abwärmeangebots vorgesehen sein, weder der Kreisprozessvorrichtung noch dem Wärmespeicher Abwärme zuzuführen, beispielsweise um eine Erhöhung des Abgasgegendrucks, den diese durch eine Integration in den Abgasstrang bewirken können, temporär durch Umleitung des Abgasstroms über einen Bypass zu vermeiden.

Weiterhin bevorzugt kann vorgesehen sein, dass die Vorrichtung zur Prognostizierung einen Fahrtenprotokollierer umfasst. Mittels des Fahrtenprotokollierers können regelmäßige Fahrten, wie beispielsweise wochentägliche Fahrten zur und von der Arbeitsstelle, vorausgesagt werden, deren Fahrtprofil (u.a. Streckenverlauf, Geschwindigkeitsprofil) dann bekannt sein können.

Diesbezüglich kann die Vorrichtung zur Prognostizierung eines zukünftig zu fahrenden Fahrtprofils auch eine Verknüpfung mit einem Dauerkalender oder einem insbesondere online aktualisierbaren Kalender umfassen, wodurch Feiertage und Wochenenden, an denen eine Fahrt zur Arbeitsstelle nicht zu erwarten ist, berücksichtigt werden können.

Der Fahrtenprotokollierer kann auch personenbezogene Daten speichern und auswerten. Hierzu kann der Fahrtenprotokollierer die protokollierten Fahrtprofile beispielsweise den einzelnen, individuell konfigurierbaren und damit regelmäßig bestimmten Fahrern zugeordneten Fahrzeugschlüsseln zuordnen.

Der Fahrtenprotokollierer kann insbesondere auch das vergangene individuelle Fahrverhalten des jeweiligen Fahrers auf der aktuellen Fahrt auswerten und zur Prognostizierung des zukünftigen Fahrverhaltens auf dieser Fahrt (ggf. nur kurzzeitig unterbrochen) auswerten.

Bevorzugt kann vorgesehen sein, dass der Kreisprozess ein Dampfkreisprozess, insbesondere ein Clausius-Rankine-Prozess, ist, bei dem das Arbeitsmedium im flüssigen Zustand mittels einer Pumpe druckerhöht wird, in der ersten Wärmetauschvorrichtung verdampft und vorzugsweise überhitzt wird und in der zweiten Wärmetauschvorrichtung kondensiert. Dann kann eine Integration des Wärmespeichers in die Kreisprozessvorrichtung, bei der der (direkte oder indirekte) Wärmeübergang von dem Wärmespeicher auf das Arbeitsmedium in oder stromauf der ersten Wärmetauschvorrichtung erfolgt, dazu genutzt werden, das Verdampfen des Arbeitsmediums sicher zu stellen, auch wenn die von dem Abgas übertragene Wärmeenergie dafür noch nicht ausreichend ist. Dadurch wird dann die Umwandlung von Wärmeenergie in mechanische Arbeit in der Expansionsvorrichtung ermöglicht. Um dies zu erreichen, ist der Wärmespeicher vorzugsweise derart ausgestaltet, dass die Entladungstemperatur, d.h. die Temperatur des Arbeitsmediums, die durch den Wärmeübergang von dem Wärmespeicher bei den im übrigen herrschenden Bedingungen erreichbar ist, oberhalb der Verdampfungstemperatur des Arbeitsmediums liegt

In einer weiterhin bevorzugten Ausgestaltung der erfindungsgemäßen Antriebseinheit kann vorgesehen sein, dass der Wärmeübergang von dem Arbeitsmedium auf das Kühlmittel eines Motorkühlkreises des Verbrennungsmotors erfolgt. Dadurch wird zum einen ermöglicht, die Abwärme des Kreisprozesses, die einen Großteil (z.B. ca. 85%) der zugeführten Wärmeenergie darstellen kann, entweder über einen Kühler, insbesondere den Hauptkühler des Kraftfahrzeugs, ohne einen zusätzlichen Kühler an die Umgebungsluft abzuführen. Dazu kann vorgesehen sein, dass die in der zweiten Wärmetauschvorrichtung aufgenommene Wärmeenergie stromab des Verbrennungsmotors in den Motorkühlkreis übertragbar ist. Dazu kann zumindest ein Wärmetauscher der zweiten Wärmetauschvorrichtung an dieser Stelle in den Motorkühlkreis integriert sein. Dadurch wird verhindert, dass die aus der Kreisprozessvorrichtung in den Motorkühlkreis überführte Wärmeenergie die Kühlleistung für den Verbrennungsmotor verschlechtert. Zum anderen ermöglicht diese Ausgestaltung der erfindungsgemäßen Antriebseinheit, dass in bestimmten Betriebszuständen, beispielsweise in einer Warmlaufphase nach einem Kaltstart der Brennkraftmaschine, wenn diese (insbesondere das Kühlmittel des Motorkühlkreises oder das Motoröl) noch nicht den vorgesehenen Betriebstemperaturbereich erreicht hat, die Abwärme der Kreisprozessvorrichtung zur schnelleren Erwärmung des Motorkühlkreises (und gegebenenfalls mit dem Motorkühlkreis wärmetauschend verbundener anderer Funktionselemente, z.B. Innenraumheizung, Getriebeöl, Motoröl, etc.) zu erreichen. Dabei kann durch die schnelle Erwärmung des Arbeitsmediums mittels des Wärmespeichers auch die von dem Wärmespeicher freigesetzte Wärmeenergie entsprechend genutzt werden.

In einer weiterhin bevorzugten Ausgestaltung der erfindungsgemäßen Antriebseinheit mit in die Kreisprozessvorrichtung integriertem Wärmespeicher kann vorgesehen sein, dass die Kreisprozessvorrichtung einen Bypass umfasst, durch den die Expansionsvorrichtung umgehbar ist. Dies kann insbesondere vorteilhaft sein, wenn die Entladungstemperatur des Wärmespeichers (zeitweise) unterhalb der Verdampfungstemperatur des Arbeitsmediums liegt. Dann ist zwar die Durchführung des Dampfkreisprozesses eventuell nicht möglich, jedoch kann die Kreisprozessvorrichtung als Transferkreis genutzt werden, um die Wärmeenergie aus dem Wärmespeicher und/oder dem Abgas an das Kühlmittel des Motorkühlkreises zu übertragen. Die Verwendung des Bypasses kann auch sinnvoll sein, wenn eine Umwandlung von thermischer in mechanische Energie mittels der Kreisprozessvorrichtung nicht gewünscht oder erforderlich ist.

Um zu verhindern, dass der Wärmeentzug aus dem Abgas durch die Kreisprozessvorrichtung ein schnelles Aufheizen oder den korrekten Betrieb einer Abgasnachbehandlungseinrichtung (z.B. Katalysator(en) und/oder Partikelfilter) behindert, kann vorzugsweise vorgesehen sein, dass ein Wärmetauscher der ersten Wärmetauschvorrichtung hinter der Abgasnachbehandlungseinrichtung in den Abgasstrang integriert ist.

Neben einer direkten Nutzung der Wärmeenergie des Abgases durch eine Anordnung eines Wärmetauschers in dem Abgasstrom kann alternativ oder zusätzlich auch eine indirekte Nutzung der Abgaswärmeenergie vorgesehen sein. Hierzu kann die erste Wärmetauschvorrichtung beispielsweise (weitere) Wärmetauscher umfassen, die an Komponenten (z.B. Abgaskrümmer, Kühler einer (Hochdruck- oder Niederdruck-)Abgasrückführung, Kühler für die Turbine eines Abgasturboladers) des Abgasstrangs (ggf. auch des Motorkühlkreises, dessen Wärmeenergie auch aus dem Abgas stammt) angeordnet sind.

Mehrere Wärmetauscher der ersten Wärmetauschvorrichtung lassen sich vorteilhaft kombinieren, wenn die erste Wärmetauschvorrichtung einen oder mehrere erste Wärmetauscher und (mindestens) einen zweiten Wärmetauscher sowie (mindestens) einen Zwischenkreis mit einem Transfermedium umfasst, wobei in dem/den ersten Wärmetauscher(n) Wärmeenergie (direkt oder indirekt) von dem Abgas auf das Transfermedium und in dem zweiten Wärmetauscher Wärmeenergie (direkt oder indirekt) von dem Transfermedium auf das Arbeitsmedium übergeht. Der Zwischenkreis kann dabei insbesondere auch noch eine Pumpe zum Umwälzen des Transfermediums und/oder einen Ausgleichsbehälter aufweisen. Ein weiterer Vorteil eines solchen Zwischenkreises kann darin liegen, dass das Arbeitsmedium vor zu hohen Temperaturen des Abgases oder der von dem Abgas erhitzten Komponenten geschützt wird. Der Zwischenkreis kann somit als thermischer Dämpfer fungieren. Demnach kann ein solcher Zwischenkreis auch sinnvoll eingesetzt werden, wenn die erste Wärmetauschvorrichtung nur einen ersten Wärmetauscher aufweist.

Bei einer Ausgestaltung der ersten Wärmetauschvorrichtung mit einem Zwischenkreis kann besonders vorteilhaft vorgesehen sein, dass der Wärmespeicher in den Zwischenkreis intergiert ist. Dabei kann weiterhin bevorzugt auch ein Bypass des Zwischenkreises vorgesehen sein, durch den der Wärmespeicher bedarfsweise umgehbar ist.

Um eine Überdimensionierung der Kreisprozessvorrichtung und damit regelmäßig einen schlechten Wirkungsgrad bei einem Teillastbetrieb zu vermeiden, kann vorzugsweise vorgesehen sein, dass die Maximalleistung der Kreisprozessvorrichtung auf den Abgaswärmestrom bei einem Betrieb des Verbrennungsmotors bei Teillast ausgelegt ist. Da die Verbrennungsmotoren heutiger Kraftfahrzeuge die meiste Zeit bei Teillast betrieben werden, kann dann ein guter Wirkungsgrad für die Kreisprozessvorrichtung erreicht werden. Wird der Verbrennungsmotor dagegen zeitweise bei oder nahe der Volllast betrieben, kann die dann überschüssige Wärmeenergie des Abgases, die von der Kreisprozessvorrichtung nicht wirksam umsetzbar ist, in dem Wärmespeicher gespeichert werden, um diesen (wieder) aufzuladen.

Bei dem Wärmespeicher kann es sich vorzugsweise um einen Latentwärmespeicher oder einen thermochemischen Speicher handeln. Latentwärmespeicher sind Vorrichtungen, die thermische Energie mit vielen Wiederholzyklen und über lange Zeit speichern können. Man nutzt dazu sogenannte Phasenwechselmaterialien (PCM: "phase change materials"), deren latente Schmelzwärme, Lösungswärme oder Absorptionswärme wesentlich größer ist als die Wärme, die sie aufgrund ihrer normalen spezifischen Wärmekapazität (ohne den Phasenumwandlungseffekt) speichern können. Thermochemische Speicher nutzen die Enthalpie reversibler chemischer Reaktionen, z.B. von auf Chemisorption beruhenden Absorptions- und Desorptionsprozessen.

In einer weiterhin bevorzugten Ausgestaltung der erfindungsgemäßen Antriebseinheit kann vorgesehen sein, dass die Kreisprozessvorrichtung zusätzlich einen Verdichter, der alternativ zu der Expansionsvorrichtung einsetzbar ist, und eine Drossel umfasst, so dass diese auch in einem linksläufigen thermodynamischen Kreisprozess einsetzbar ist, wobei ein (direkter oder indirekter) Wärmeübergang von dem Abgas auf das Arbeitsmedium oder ein (direkter oder indirekter) Wärmeübergang von dem Kühlmittel auf das Arbeitsmedium erfolgt.

Eine solche Ausgestaltung der erfindungsgemäßen Antriebseinheit ermöglicht, insbesondere nach der Beendigung des Betriebs der Brennkraftmaschine, die in verschiedenen Komponenten der Antriebseinheit gespeicherte Wärmeenergie teilweise weiter zu nutzen.

Demnach kann insbesondere vorgesehen sein, dass die Kreisprozessvorrichtung im Betrieb des Verbrennungsmotors in einem rechtsläufigen Kreisprozess und im Stillstand des Verbrennungsmotors in dem linksläufigen thermodynamischen Kreisprozess betreibbar ist, d.h. zumindest temporär mittels einer entsprechenden Steuerung betrieben wird.

Die in den Komponenten gespeicherten Wärmeenergie kann nach Beendigung des Betriebs der Brennkraftmaschine insbesondere dazu genutzt werden, eine Beheizung eines Innenraums des Kraftfahrzeugs fortzusetzen. Dann kann beispielsweise vorgesehen sein, dass in dem linksläufigen Kreisprozess ein (direkter oder indirekter) Wärmeübergang von dem Abgasstrang auf das Arbeitsmedium und von dem Arbeitsmedium (direkt oder indirekt) auf Luft für eine Klimatisierung des Innenraums des Kraftfahrzeugs erfolgt. Insbesondere kann der Wärmeübergang von dem Arbeitsmedium auf die Luft für die Innenraumklimatisierung unter Zwischenschaltung des Motorkühlkreises erfolgen.

Alternativ oder zusätzlich kann mittels einer solchen Ausgestaltung der Kreisprozessvorrichtung auch die in einem Motorkühlkreis gespeicherte Wärmeenergie vorteilhaft genutzt werden. Hierzu sollte dann vorgesehen sein, dass die zweite Wärmetauschvorrichtung in den Motorkühlkreis des Verbrennungsmotors integriert ist.

Eine Nutzung der in dem Motorkühlkreis gespeicherten Wärmeenergie kann insbesondere dadurch erfolgen, dass diese Wärmeenergie zum Aufladen eines Wärmespeichers genutzt wird. Demnach kann vorgesehen sein, dass in dem linksläufigen Kreisprozess ein (direkter oder indirekter) Wärmeübergang von dem Arbeitsmedium auf den Wärmespeicher erfolgt.

Eine Nutzung der in dem Motorkühlkreis gespeicherten Wärmeenergie kann auch dafür vorgesehen sein, ein bestimmtes Temperaturniveau des (Ab-)Gases im Abgasstrang auch im Nichtbetrieb der Brennkraftmaschine aufrecht zu halten. Dies kann beispielsweise in einem länger andauernden Stop-and-Go-Betrieb des Kraftfahrzeugs mit einem regelmäßig wechselnden Betrieb/Nichtbetrieb der Brennkraftmaschine, z.B. mittels einer Start-Stopp-Automatik, ein Auskühlen einer der ersten Wärmetauschvorrichtung nachgeschalteten Abgasnachbehandlungseinrichtung verhindern.

In einer weiterhin bevorzugten Ausgestaltung der erfindungsgemäßen Antriebseinheit kann vorgesehen sein, dass der Verdichter und die Expansionsvorrichtung integral ausgebildet sind, d.h. beide Funktionen von einer Maschine erfüllt werden können. Dabei kann es sinnvoll sein, die Flussrichtung des Arbeitsmediums in den beiden Kreisprozessen umzukehren. Gleiches kann dann auch für über die erste und zweite Wärmetauschvorrichtung mit der Kreisprozessvorrichtung wärmetauschend verbundene weitere Kreisläufe, insbesondere den Motorkühlkreis und den Zwischenkreis, sinnvoll sein, um zu ermöglichen, die entsprechenden Wärmetauscher stets im Gegenstrom zu betreiben. Alternativ kann aber auch vorgesehen sein, dass der Verdichter und die Expansionsvorrichtung parallel geschaltet sind.

Da die Pumpe gegebenenfalls nur im rechtsläufigen Kreisprozess und die Drossel gegebenenfalls nur im linksläufigen Kreisprozess eingesetzt werden, kann vorteilhaft vorgesehen sein, dass diese in der Kreisprozessvorrichtung parallel geschaltet sind. Dadurch kann verhindert werden, dass diese den jeweiligen anderen Kreisprozess negativ beeinflussen.

Die Erfindung wird im Folgenden anhand von in den Zeichnungen dargestellten Ausführungsbeispielen näher erläutert. Die Zeichnungen zeigen in
- Fig. 1:: eine erste Ausführungsform einer erfindungsgemäßen Antriebseinheit für ein Kraftfahrzeug in einer schematischen Darstellung;
- Fig. 2:: eine zweite Ausführungsform einer erfindungsgemäßen Antriebseinheit für ein Kraftfahrzeug in einer schematischen Darstellung;
- Fig. 3:: eine Prinzipdarstellung eines 3-Medien-Verdampfers; und
- Fig. 4:: eine Prinzipdarstellung eines alternativen 3-Medien-Verdampfers.

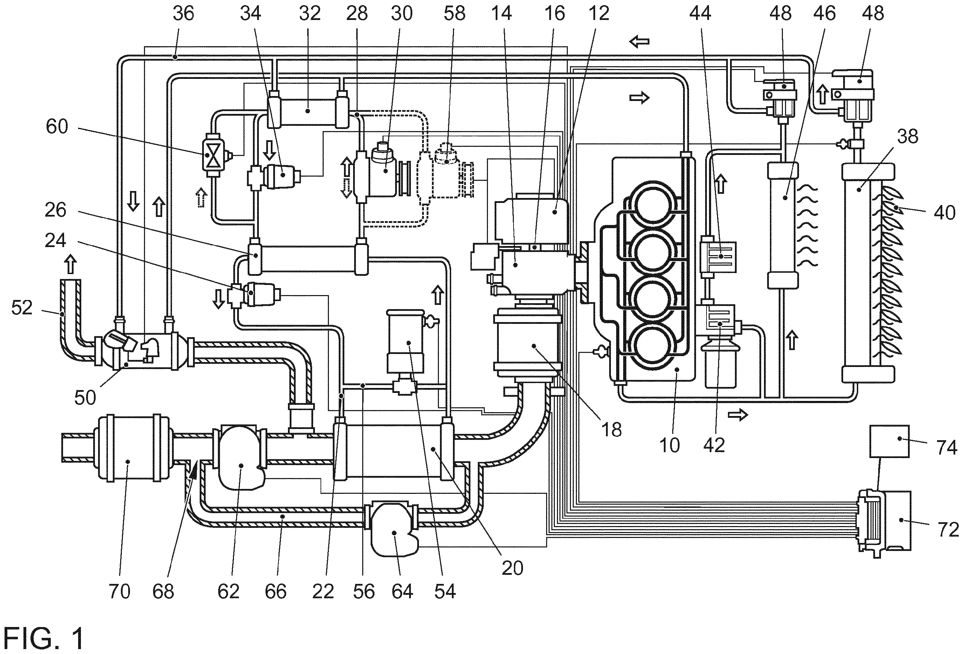

Die in der Fig. 1 dargestellte Antriebseinheit für ein Kraftfahrzeug umfasst eine Brennkraftmaschine mit einem Verbrennungsmotor 10, der beispielsweise als vierzylindriger Hubkolben-Diesel-Verbrennungsmotor ausgebildet ist. In dem Verbrennungsmotor 10 sind somit vier Zylinder ausgebildet, in denen jeweils ein Kolben beweglich gelagert ist. Die Kolben bilden mit den Wänden des dazugehörigen Zylinders jeweils einen Brennraum aus, in dem verdichtetes Frischgas (Luft) mit direkt eingespritztem Kraftstoff verbrannt wird.

Das Frischgas wird dem Verbrennungsmotor über einen zum Großteil nicht dargestellten Frischgasstrang zugeführt. Die Verdichtung des Frischgases erfolgt dabei über den Verdichter 12 eines Abgasturboladers.

Das bei der Verbrennung des Frischgases mit dem Kraftstoff entstehende Abgas wird über einen Abgasstrang aus dem Verbrennungsmotor 10 abgeführt. Dabei durchströmt das Abgas zunächst eine Turbine 14 des Abgasturboladers, die mit dem Verdichter 12 über eine Welle 16 verbunden ist, und anschließend eine erste Abgasnachbehandlungseinrichtung 18, wie beispielsweise einen Katalysator. Stromab der ersten Abgasnachbehandlungseinrichtung 18 ist ein erster Wärmetauscher 20 einer ersten Wärmetauschvorrichtung einer Kreisprozessvorrichtung in den Abgasstrang integriert.

Der erste Wärmetauscher 20 wird zum einen von dem Abgas und zum anderen von einem flüssigen Transfermedium eines Zwischenkreises 22 der Kreisprozessvorrichtung durchströmt, wobei ein Wärmeübergang von dem Abgas auf das Transfermedium erfolgen kann. Mittels einer Medienpumpe 24 des Zwischenkreises 22 wird das Transfermedium gefördert. Dadurch gelangt der von dem Abgas erwärmte Teil des Transfermediums in einen als Verdampfer ausgebildeten zweiten Wärmetauscher 26 der ersten Wärmetauschvorrichtung. Der Verdampfer wird zum einen von dem Transfermedium und zum anderen von einem Arbeitsmedium eines Arbeitskreises 28 der Kreisprozessvorrichtung durchströmt. Dabei kann ein Wärmeübergang von dem Transfermedium auf das Arbeitsmedium erfolgen. Dieser Wärmeübergang kann zu einem Verdampfen und Überhitzen des Arbeitsmediums in dem Verdampfer führen. In einem rechtsläufigen Kreisprozess der Kreisprozessvorrichtung kann der überhitzte Dampf dann in einer Expansionsvorrichtung 30 expandiert werden, wobei mechanische Leistung erzeugt wird, die zur Erzeugung von elektrischer Energie und/oder zum direkten mechanischen Antrieb des Kraftfahrzeugs zur Unterstützung des Verbrennungsmotors 10 oder von Nebenaggregaten der Brennkraftmaschine eingesetzt werden kann. In einer zweiten Wärmetauschvorrichtung der Kreisprozessvorrichtung, die in dem vorliegenden Ausführungsbeispiel lediglich einen als Kondensator ausgebildeten Wärmetauscher 32 umfasst, wird das Arbeitsmedium dann abgekühlt und wieder in die flüssige Phase überführt (kondensiert). Eine Medienpumpe 34 des Arbeitskreises 28 sorgt dann für das erneute Zuführen des flüssigen Arbeitsmediums zu dem Verdampfer.

Der Kondensator wird neben dem Arbeitsmedium auch von dem flüssigen Kühlmittel eines Motorkühlkreises 36 durchströmt, wobei während des rechtsläufigen Kreisprozesses ein Wärmeübergang von dem Arbeitsmedium auf das Kühlmittel erfolgt. Die Abwärme des rechtsläufigen Kreisprozesses kann somit insbesondere über einen Hauptkühler 38 der Antriebsvorrichtung an die Umgebungsluft abgegeben werden. Dabei kann die Menge der durch den Hauptkühler 38 strömenden Umgebungsluft mittels verstellbarer Kühlerlamellen 40 automatisch gesteuert werden.

Zusätzlich dazu kann die Abwärme des rechtsläufigen Kreisprozesses in dem Motorkühlkreis 36 auch dazu genutzt werden, das Kühlmittel nach einem Kaltstart der Brennkraftmaschine schneller auf Betriebstemperatur zu bringen oder die Betriebstemperatur in Betriebsphasen des Verbrennungsmotors 10 mit geringen Lasten möglichst hoch zu halten. Dadurch kann ein Abfall der Temperatur des Verbrennungsmotors 10 sowie auch weiterer Komponenten, wie beispielsweise eines Motorölkühlers 42 (und damit des Motoröls) und eines Getriebeölkühlers 44 (und damit des Getriebeöls) vermieden werden. Auch kann die Abwärme des rechtsläufigen Kreisprozesses zur Verbesserung einer Heizwirkung einer Heizungsanlage für einen Innenraum des Kraftfahrzeugs genutzt werden. Hierzu ist ein Wärmetauscher 46 der Heizungsanlage in den Motorkühlkreis 36 integriert.

Über eine entsprechende Ansteuerung von zwei in den Motorkühlkreis 36 integrierten Kühlmittelpumpen 48 sowie von nicht dargestellten Absperrventilen kann bedarfsangepasst der Durchfluss von Kühlmittel durch einzelne Komponenten des Motorkühlkreises 36 geregelt werden. Insbesondere kann während der Warmlaufphase nach einem Kaltstart und bei einem anhaltenden Betrieb des Verbrennungsmotors 10 mit sehr geringen Lasten eine Kühlung des Kühlmittels im Hauptkühler 38 unterbunden werden, wodurch die Betriebstemperatur des Kühlmittels möglichst schnell erreicht oder beibehalten werden kann.

Das Kühlmittel des Motorkühlkreises 36 durchströmt weiterhin einen Kühler 50 einer Niederdruckabgasrückführung 52. Die Niederdruckabgasrückführung 52 zweigt stromab des ersten Wärmetauschers 20 der ersten Wärmetauschvorrichtung aus dem Abgasstrang ab. Mittels Abschaltventilen ist es möglich, die Durchströmung des Kühlers 50 der Niederdruckabgasrückführung 52 zu unterbinden, wobei das gesamte Kühlmittel dann über den Kondensator der Kreisprozessvorrichtung geführt wird.

Die Antriebsvorrichtung umfasst weiterhin einen Wärmespeicher 54, der in einen Bypass 56 des Zwischenkreises 22 zur möglichen Umgehung des ersten Wärmetauschers 20 integriert ist. Der als Latentwärmespeicher ausgebildete Wärmespeicher 54 kann Wärmeenergie aus dem Transfermedium aufnehmen, über einen langen Zeitraum speichern und bei Bedarf wieder an das Transfermedium abgegeben. Insbesondere kann vorgesehen sein, dass der Wärmespeicher Wärmeenergie aus dem Transfermedium aufnimmt, wenn der Verbrennungsmotor 10 mit hohen Lasten betrieben wird. Die dann in dem ersten Wärmetauscher 20 von dem Abgas auf das Transfermedium übertragbare Wärmeenergie kann dann größer sein, als die in dem rechtsläufigen Kreisprozess wirkungsvoll umsetzbare Wärmeenergie. Die überschüssige Wärmeenergie kann vorteilhaft zum "Aufladen" des Wärmespeichers 54 eingesetzt werden.

Wird der Verbrennungsmotor 10 dagegen in der Warmlaufphase oder mit niedrigen Lasten betrieben, kann die in dem ersten Wärmetauscher 20 auf das Transfermedium übertragene Wärmeenergie geringer sein, als die im rechtsläufigen Kreisprozess umsetzbare Wärmeenergie. Insbesondere kann diese Wärmeenergie so gering sein, dass diese für das Verdampfen und Überhitzen des Arbeitsmediums im Verdampfer nicht ausreicht. Dann kann durch eine entsprechende Ansteuerung des Wärmespeichers 54 die darin gespeicherte Wärmeenergie zunächst an das Transfermedium und dann im Verdampfer an das Arbeitsmedium übertragen werden. Dadurch kann der rechtsläufige Kreisprozess unterstützt oder sogar erst ermöglicht werden.

Sofern die von dem Wärmespeicher 54 und/oder dem Abgas auf das Transfermedium übertragene Wärmeenergie zu gering ist, um das Verdampfen des Arbeitsmediums zu gewährleisten, kann der Arbeitskreis 28 auch als Transferkreis genutzt werden, so dass dann zwar kein rechtsläufiger Kreisprozess durchgeführt wird und dementsprechend von der Expansionsvorrichtung 30 auch keine mechanische Leistung erzeugt wird, jedoch weiterhin ein Übergang von Wärmeenergie von dem Abgas und/oder dem Wärmespeicher 54 auf das Kühlmittel des Motorkühlkreises 36 erfolgen kann. Um zu verhindern, dass dabei die ungenutzte Expansionsvorrichtung 30 von dem dann als Transfermedium wirkenden Arbeitsmedium durchströmt werden muss, kann ein nicht dargestellter Bypass zur Umgehung der Expansionsvorrichtung 30 vorgesehen sein.

Die Kreisprozessvorrichtung ist derart ausgebildet, dass diese auch in einem linksläufigen Kreisprozess und insbesondere als Wärmepumpe betrieben werden kann. Dazu ist entweder die Expansionsvorrichtung 30 derart ausgebildet, dass diese auch als Verdichter arbeiten kann, oder ein separater Verdichter 58 ist zu der Expansionsvorrichtung 30 parallel geschaltet in den Arbeitskreis 28 integriert (vgl. gestrichelte Ausgestaltung in der Fig. 1). Weiterhin umfasst der Arbeitskreis 28 eine Drossel 60, die zu der Medienpumpe 34 parallel geschaltet ist.

Während ein Betrieb der Kreisprozessvorrichtung in einem rechtsläufigen Kreisprozess primär während des Betriebs des Verbrennungsmotors 10 vorgesehen ist, um den kontinuierlichen Wärmestrom des Abgases zu nutzen, ist ein Betrieb als Wärmepumpe insbesondere dann vorgesehen, wenn der Verbrennungsmotor 10 nicht mehr in Betrieb ist. Dadurch wird ermöglicht die in verschiedenen Komponenten der Antriebsvorrichtung noch gespeicherte Wärmeenergie zu nutzen.

Insbesondere kann vorgesehen sein, die in dem Wärmespeicher 54 und/oder in dem noch warmen Abgasstrang gespeicherte Wärmeenergie für einen fortgesetzten Betrieb der Innenraumheizung zu verwenden. Hierzu wird das Arbeitsmedium in dem Arbeitskreis 28 von dem von dem Wärmespeicher 54 und/oder dem Abgas erwärmten Transfermedium in dem Verdampfer auf Unterdruckniveau verdampft, dann im Verdichter verdichtet und auf einem höheren Temperaturniveau im Kondensator unter Wärmeübergang auf das Kühlmittel kondensiert und mittels der Drossel 60 auf den unteren Prozessdruck entspannt. Dabei ist vorgesehen, dass die Strömungsrichtung in dem Arbeitskreis 28 identisch zu derjenigen bei einem Betrieb in einem rechtsläufigen Kreisprozess ist (durchgezogene Pfeile im Arbeitskreis).

Weiterhin kann vorgesehen sein, dass die in dem Motorkühlkreis 28 und insbesondere in dem Kühlmittel gespeicherte Wärmeenergie dazu genutzt wird, den Wärmespeicher 54 nach dem Abstellen des Verbrennungsmotors 10 wieder aufzuladen. Hierzu wird das Arbeitsmedium in dem Arbeitskreis 28 in dem Wärmetauscher 32 der zweiten Wärmetauschvorrichtung (im rechtsläufigen Kreisprozess der Kondensator) durch Wärmeübergang von dem "Kühlmittel" auf einem Unterdruckniveau verdampft, dann in der als Verdichter arbeitenden Expansionsvorrichtung 30 oder in dem Verdichter 58 verdichtet und auf einem höheren Temperaturniveau in dem zweiten Wärmetauscher 26 der ersten Wärmetauschvorrichtung (im rechtsläufigen Kreisprozess der Verdampfer) unter Wärmeabgabe auf das Transfermedium kondensiert und mittels der Drossel 60 auf den unteren Prozessdruck entspannt. Von dem erwärmten Transfermedium kann dann ein Wärmeübergang auf den Wärmespeicher 54 erfolgen, um diesen aufzuladen. Dabei ist vorgesehen, dass die Strömungsrichtung in dem Arbeitskreis 28 umgekehrt zu derjenigen bei einem Betrieb während des rechtsläufigen Kreisprozesses ist (gestrichelte Pfeile im Arbeitskreis). Um einen Betrieb der als Verdichter arbeitenden Expansionsvorrichtung 30 oder des Verdichters 58 bei beiden Strömungsrichtungen zu ermöglichen, kann vorgesehen sein, dessen Saug- und Druckseiten mittels einer geeigneten Ventilschaltung (nicht dargestellt) umzukehren. Um ein Erreichen des unteren Prozessdrucks sicherzustellen kann vorgesehen sein, eine Unterdruckpumpe (nicht dargestellt) in den Arbeitskreis 28 zu integrieren.

Der Abgasstrang umfasst noch eine erste Abgasklappe 62, die stromab des ersten Wärmetauschers 20 und der Abzweigung der Niederdruckabgasrückführung 52 in einen Hauptstrang des Abgasstrangs integriert ist, sowie eine zweite Abgasklappe 64, die in einen den ersten Wärmetauscher 20, die Abzweigung der Niederdruckabgasrückführung 52 und die erste Abgasklappe 62 umgehenden Bypass 66 integriert ist. Mittels der Abgasklappen 62, 64 ist es möglich, den Abgasstrom über den Bypass 66 bei Bedarf an dem ersten Wärmetauscher 20 und der Niederdruckabgasrückführung 52 vorbei zu leiten. Dies kann insbesondere erfolgen, wenn nach einem Kaltstart zunächst ein stromab auch der Zuführmündung 68 des Bypasses 66 angeordnete zweite Abgasnachbehandlungseinrichtung 70 (z.B. ein Dieselpartikelfilter) möglichst schnell auf Betriebstemperatur gebracht werden soll, oder wenn der teilweise erhebliche Abgasgegendruck, den der erste Wärmetauscher 20 bewirken kann, temporär vermieden werden soll.

Sämtliche ansteuerbare Komponenten der Antriebsvorrichtung werden von einem Motorsteuergerät 72 angesteuert. Diese sind somit vorzugsweise elektrisch ansteuer- und betätigbar ausgestaltet, können aber auch pneumatisch oder hydraulisch betätigt sein, wozu elektrisch ansteuerbare, pneumatisch oder hydraulisch wirkende Aktoren vorgesehen sein können.

Die Ansteuerung der Komponenten von dem Motorsteuergerät 72 kann in Abhängigkeit von Signalen eines Navigationssystems 74 der Antriebsvorrichtung bzw. des Kraftfahrzeugs erfolgen. Dadurch kann u.a. in Abhängigkeit von einem prognostizierten Fahrtprofil vorgesehen sein, den Wärmespeicher 54 zu laden oder zu entladen, um eine möglichst optimale Nutzung der Wärmeenergie des Abgases zu erreichen.

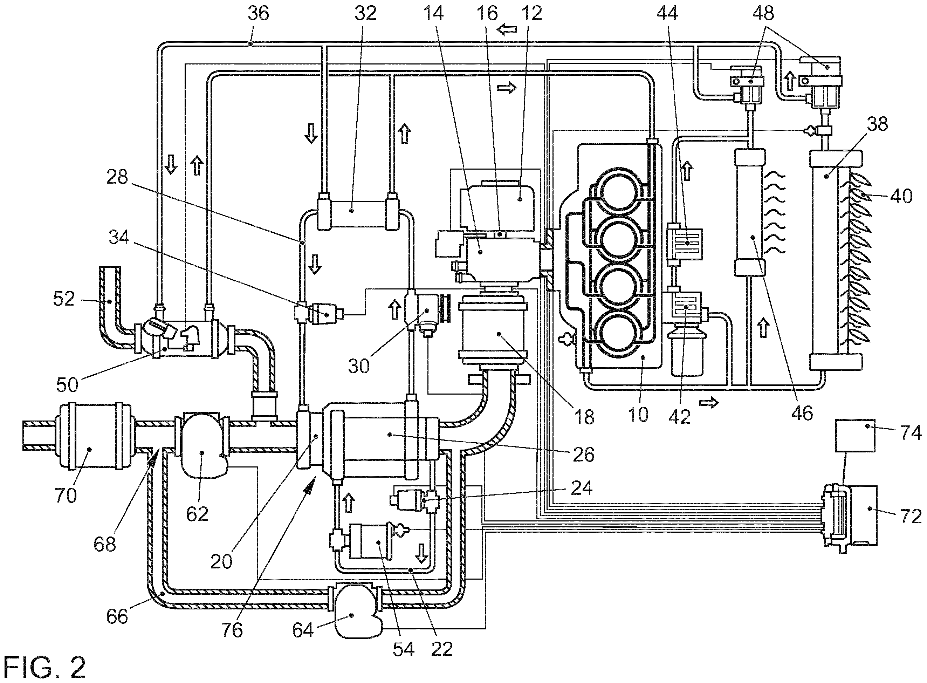

Die in der Fig. 2 dargestellte Ausführungsform einer Antriebseinheit unterscheidet sich von derjenigen der Fig. 1 zum einen darin, dass die Kreisprozessvorrichtung nicht so ausgebildet ist, dass diese auch in einem linksläufigen Kreisprozess einsetzbar ist.

Weiterhin ist die erste Wärmetauschvorrichtung der Kreisprozessvorrichtung derart ausgebildet, dass diese den ersten Wärmetauscher 20 und den zweiten Wärmetauscher 26 in einem 3-Medienwärmetauscher, der konkret als 3-Medien-Verdampfer 76 ausgebildet ist, integriert. Dieser wird in einem oder mehreren ersten Medienkanälen 78 von dem Abgas als erstem Medium, in einem oder mehreren zweiten Medienkanälen 80 von dem Arbeitsmedium eines Arbeitskreises 28 als zweitem Medium und in einem oder mehreren dritten Medienkanälen 82 von dem Transfermedium eines Zwischenkreises 22 als drittem Medium durchströmt. Dabei ist vorgesehen, dass durch eine entsprechende Anordnung der die einzelnen Medien führenden Medienkanäle 78, 80, 82 des 3-Medien-Verdampfers 76 das Transfermedium zumindest in einem Abschnitt der gemeinsamen Durchströmungslänge von Abgas und Arbeitsmedium zwischen dem Abgas und dem Arbeitsmedium angeordnet ist, so dass dieses bzw. der Zwischenkreis 22 die Funktion eines Wärmedämpfers und -puffers ausüben kann.

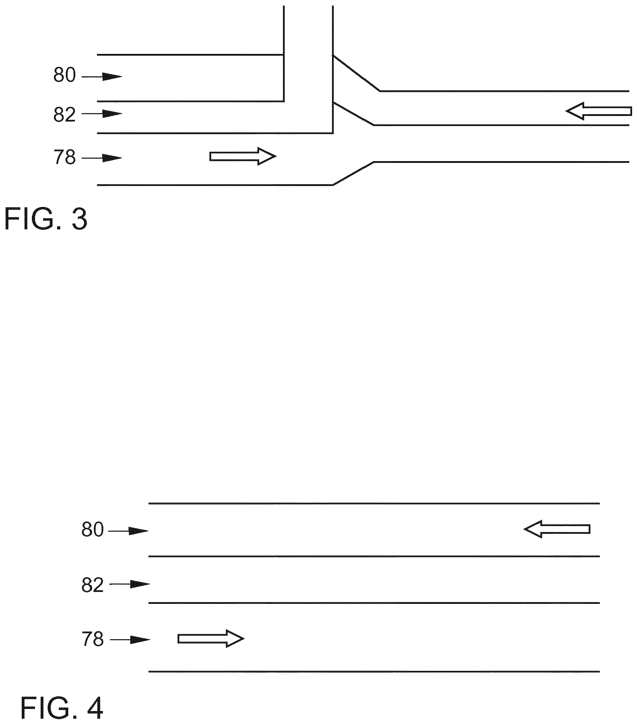

Prinzipdarstellungen zur Funktionsweise des 3-Medienwärmetauschers bzw. 3-Medien-Verdampfers 76 sind in den Fig. 3 und 4 dargestellt.

Dabei zeigt die Fig. 4 eine Prinzipdarstellung eines 3-Medien-Wärmetauschers, bei dem das Transfermedium über die gesamte Durchströmungslänge zwischen dem Abgas und dem Arbeitsmedium angeordnet ist.

In der Fig. 3 erstreckt sich der das Transfermedium führende Medienkanal dagegen nur über einen ersten Abschnitt der Durchströmungslänge, so dass in einem zweiten Abschnitt ein direkter Wärmeübergang von dem Abgas auf das Arbeitsmedium möglich ist. Dabei ist vorgesehen, dass der erste Abschnitt eingangsseitig des 3-Medien-Wärmetauschers bezüglich der Abgasströmung vorgesehen ist. Dadurch wirkt das Transfermedium als Wärmedämpfer in dem ersten Abschnitt, in dem das Abgas noch eine so hohe Temperatur aufweisen kann, dass diese zu einer negativen Beeinflussung des Arbeitsmediums führen kann, während in dem zweiten Abschnitt, in dem das Abgas bereits auf eine unschädliche Temperatur heruntergekühlt wurde, ein direkter Wärmeübergang auf das Arbeitsmedium vorgesehen ist. Durch die dann höhere Temperaturdifferenz zwischen den zwei wärmetauschenden Medien kann der Gesamtwärmeübergang in dem 3-Medien-Wärmetauscher verbessert werden.

In beiden Ausführungsformen ist vorgesehen, dass die Strömungsrichtungen des Abgases und des Arbeitsmediums entgegengesetzt sind. Die Strömung des Transfermedium kann in beide Richtungen erfolgen. In der Antriebseinheit gemäß der Fig. 2 entspricht die Durchströmungsrichtung des Transfermediums derjenigen des Arbeitsmediums.

### Bezugszeichenliste

- 10: Verbrennungsmotor
- 12: Verdichter des Abgasturboladers
- 14: Turbine des Abgasturboladers
- 16: Welle des Abgasturboladers
- 18: erste Abgasnachbehandlungseinrichtung
- 20: erster Wärmetauscher der ersten Wärmetauschvorrichtung
- 22: Zwischenkreis
- 24: Medienpumpe des Zwischenkreises
- 26: zweiter Wärmetauscher der ersten Wärmetauschvorrichtung
- 28: Arbeitskreis
- 30: Expansionsvorrichtung
- 32: Wärmetauscher der zweiten Wärmetauschvorrichtung
- 34: Medienpumpe des Arbeitskreises
- 36: Motorkühlkreis
- 38: Hauptkühler
- 40: Lamellen
- 42: Motorölkühler
- 44: Getriebeölkühler
- 46: Wärmetauscher der Heizungsanlage
- 48: Kühlmittelpumpe
- 50: Kühler der Niederdruckabgasrückführung
- 52: Niederdruckabgasrückführung
- 54: Wärmespeicher
- 56: Bypasses des Zwischenkreises
- 58: Verdichter des Arbeitskreises
- 60: Drossel
- 62: erste Abgasklappe
- 64: zweite Abgasklappe
- 66: Bypass des Abgasstrangs
- 68: Zuführmündung
- 70: zweite Abgasnachbehandlungseinrichtung
- 72: Motorsteuergerät
- 74: Navigationssystem
- 76: 3-Medien-Verdampfer
- 78: Medienkanal für das Abgas
- 80: Medienkanal für das Arbeitsmedium
- 82: Medienkanal für das Transfermedium

## Patentansprüche

1. Antriebseinheit für ein Kraftfahrzeug mit
- einer Brennkraftmaschine, die einen Verbrennungsmotor (10) sowie einen Abgasstrang, über den Abgas aus dem Verbrennungsmotor (10) abführbar ist, umfasst,
- einer Kreisprozessvorrichtung, die zur Wandlung von in dem Abgas enthaltener Wärmeenergie in einem rechtsläufigen thermodynamischen Kreisprozess in mechanische Arbeit einsetzbar ist, wobei der Kreisprozess
- einen Wärmeübergang von dem Abgas auf ein Arbeitsmedium in einer ersten Wärmetauschvorrichtung umfasst, wodurch die Temperatur und/oder der Druck des Arbeitsmediums erhöht wird,
- eine Expansion des Arbeitsmediums in einer Expansionsvorrichtung (30) zur Erzeugung der mechanischen Arbeit umfasst, und
- einen Wärmeübergang von dem Arbeitsmedium auf ein Kühlmittel in einer zweiten Wärmetauschvorrichtung umfasst,
- einem Wärmespeicher (54), der zur Aufnahme von Wärmenergie des Abgases und zur bedarfsweisen Abgabe der Wärmeenergie vorgesehen ist,
**dadurch gekennzeichnet, dass** der Wärmespeicher (54) in die oder stromauf der ersten Wärmetauschvorrichtung und stromab der zweiten Wärmetauschvorrichtung in die Kreisprozessvorrichtung integriert ist und eine Vorrichtung zur Prognostizierung eines zukünftig zu fahrenden Fahrtprofils vorgesehen ist, wobei eine Steuerung einer Wärmeabgabe von dem Wärmespeicher (54) auf das Arbeitsmedium zur Unterstützung des Kreisprozesses in Abhängigkeit von dem prognostizierten Fahrtprofil erfolgt.

2. Antriebseinheit gemäß Anspruch 1, **dadurch gekennzeichnet, dass** die Vorrichtung zur Prognostizierung ein Navigationssystem (74) umfasst.

3. Antriebseinheit gemäß Anspruch 1, **dadurch gekennzeichnet, dass** die Vorrichtung zur Prognostizierung einen Fahrtenprotokollierer umfasst.

4. Antriebseinheit einem der vorhergehenden Ansprüche, **dadurch gekennzeichnet, dass** der Kreisprozess ein Dampfkreisprozess ist, wobei das Arbeitsmedium im flüssigen Zustand mittels einer Pumpe druckerhöht wird, in der ersten Wärmetauschvorrichtung verdampft und in dem zweiten Wärmetauscher kondensiert.

5. Antriebseinheit gemäß einem der vorhergehenden Ansprüche, **dadurch gekennzeichnet, dass** der Wärmeübergang von dem Arbeitsmedium auf das Kühlmittel eines Motorkühlkreises (36) des Verbrennungsmotors (10) erfolgt.

6. Antriebseinheit gemäß einem der vorhergehenden Ansprüche, **dadurch gekennzeichnet, dass** die Kreisprozessvorrichtung einen Bypass umfasst, durch den die Expansionsvorrichtung (30) umgehbar ist.

7. Antriebseinheit gemäß Anspruch 6, **dadurch gekennzeichnet, dass** der Bypass geöffnet ist, wenn die Entladungstemperatur des Wärmespeichers (54) unterhalb der Verdampfungstemperatur des Arbeitsmediums liegt.

8. Antriebseinheit gemäß einem der vorhergehenden Ansprüche, **dadurch gekennzeichnet, dass** die erste Wärmetauschvorrichtung einen ersten Wärmetauscher (20) und einen zweiten Wärmetauscher (26) sowie einen Zwischenkreis (22) mit einem Transfermedium umfasst, wobei in dem ersten Wärmetauscher (20) Wärmeenergie von dem Abgas auf das Transfermedium und in dem zweiten Wärmetauscher (26) Wärmeenergie von dem Transfermedium auf das Arbeitsmedium übergeht.

9. Antriebseinheit gemäß Anspruch 8, **dadurch gekennzeichnet, dass** der Wärmespeicher (54) in den Zwischenkreis (22) integriert ist.

10. Antriebseinheit gemäß einem der vorhergehenden Ansprüche, **dadurch gekennzeichnet, dass** eine Steuerung des Wärmeübergangs auf die Kreisprozessvorrichtung in Abhängigkeit von dem prognostizierten Fahrprofil erfolgt.

## Claims

1. Drive unit for a motor vehicle having
- a combustion engine which comprises an internal combustion engine (10) and an exhaust gas section, via which exhaust gas can be discharged from the internal combustion engine (10),
- a cycle apparatus which can be used for converting thermal energy which is contained in the exhaust gas into mechanical work in a clockwise thermodynamic cycle, the cycle
- comprising a thermal transfer from the exhaust gas to an operating medium in a first heat exchanging apparatus, as a result of which the temperature and/or the pressure of the operating medium are/is increased,
- comprising an expansion of the operating medium in an expansion apparatus (30) for producing the mechanical work, and
- comprising a thermal transfer from the operating medium to a coolant in a second heat exchanging apparatus,
- a heat accumulator (54) which is provided for receiving thermal energy of the exhaust gas and for outputting the thermal energy as required,
**characterized in that**, in the cycle apparatus, the heat accumulator (54) is integrated into the first heat exchanging apparatus or upstream of the first heat exchanging apparatus and downstream of the second heat exchanging apparatus, and **in that** an apparatus for predicting a journey profile to be driven in future is provided, an output of heat from the heat accumulator (54) to the operating medium for assisting the cycle being controlled in a manner which is dependent on the predicted journey profile.

2. Drive unit according to Claim 1, **characterized in that** the apparatus for predicting comprises a navigation system (74).

3. Drive unit according to Claim 1, **characterized in that** the apparatus for predicting comprises a journey log.

4. Drive unit according to one of the preceding claims, **characterized in that** the cycle is a steam cycle, the pressure of the operating medium in the liquid state being increased by means of a pump, the said operating medium evaporating in the first heat exchanging apparatus and condensing in the second heat exchanger.

5. Drive unit according to one of the preceding claims, **characterized in that** the thermal transfer takes place from the operating medium to the coolant of an engine cooling circuit (36) of the internal combustion engine (30).

6. Drive unit according to one of the preceding claims, **characterized in that** the cycle apparatus comprises a bypass, by way of which the expansion apparatus (30) can be bypassed.

7. Drive unit according to Claim 6, **characterized in that** the bypass is open when the discharge temperature of the heat accumulator (54) lies below the evaporation temperature of the operating medium.

8. Drive unit according to one of the preceding claims, **characterized in that** the first heat exchanging apparatus comprises a first heat exchanger (20), a second heat exchanger (26) and an intermediate circuit (22) with a transfer medium, thermal energy transferring from the exhaust gas to the transfer medium in the first heat exchanger (20), and thermal energy transferring from the transfer medium to the operating medium in the second heat exchanger (26).

9. Drive unit according to Claim 8, **characterized in that** the heat accumulator (54) is integrated into the intermediate circuit (22).

10. Drive unit according to one of the preceding claims, **characterized in that** the thermal transfer to the cycle apparatus is controlled in a manner which is dependent on the predicted journey profile.

## Revendications

1. Unité de propulsion pour un véhicule à moteur, avec :
- un groupe de moteur à combustion interne, lequel comprend un moteur à combustion interne (10) ainsi qu'un circuit des gaz d'échappement, par l'intermédiaire duquel les gaz d'échappement peuvent être évacués en dehors du moteur à combustion interne (10) ;
- un mécanisme de processus cyclique, lequel peut être utilisé dans un travail mécanique en vue de la conversion de l'énergie thermique contenue dans les gaz d'échappement en un processus cyclique thermodynamique, avec une rotation horaire, selon laquelle le processus cyclique :
- comprend un transfert de chaleur depuis les gaz d'échappement vers un médium de travail dans un premier dispositif d'échange de chaleur, ce qui permet ainsi d'augmenter la température et/ou la pression du médium de travail ;
- comprend une expansion du médium de travail dans un dispositif d'expansion (30) en vue de la génération du travail mécanique ; et
- comprend un transfert de chaleur depuis le médium de travail vers un liquide de refroidissement, dans un deuxième dispositif d'échange de chaleur ;
- un accumulateur de chaleur (54), lequel est prévu en vue de la réception de l'énergie thermique issue des gaz d'échappement et en vue de la libération de l'énergie thermique en fonction des besoins, **caractérisée en ce que**, dans le mécanisme de processus cyclique, l'accumulateur de chaleur (54) est intégré dans le premier dispositif d'échange ou en amont du premier dispositif d'échange de chaleur et en aval du deuxième dispositif d'échange de chaleur et **en ce qu'**un dispositif est prévu, lequel est destiné à la prévision d'un profil de conduite devant être parcouru à l'avenir, selon laquelle une commande d'une fourniture de chaleur a lieu depuis l'accumulateur de chaleur (54) vers le médium de travail en vue de soutenir le processus cyclique en fonction du profil de conduite pronostiqué.

2. Unité de propulsion selon la revendication 1, **caractérisée en ce que** le dispositif destiné à la prévision comprend un système de navigation (74).

3. Unité de propulsion selon la revendication 1, **caractérisée en ce que** le dispositif destiné à la prévision comprend un enregistreur de trajet.

4. Unité de propulsion selon l'une des revendications précédentes, **caractérisée en ce que** le processus cyclique est un processus à circuit de vapeur, selon laquelle la pression dans le médium de travail est accrue à l'état liquide au moyen d'une pompe, le médium de travail est ensuite vaporisé dans le premier dispositif d'échange de chaleur, puis condensé dans le deuxième échangeur de chaleur.

5. Unité de propulsion selon l'une des revendications précédentes, **caractérisée en ce que** le transfert de chaleur a lieu depuis le médium de travail vers le liquide de refroidissement d'un circuit de refroidissement de moteur (36) du moteur à combustion interne (10).

6. Unité de propulsion selon l'une des revendications précédentes, **caractérisée en ce que** le mécanisme de processus cyclique comprend un circuit de dérivation, par l'intermédiaire duquel le dispositif d'expansion (30) peut être contourné.

7. Unité de propulsion selon la revendication 6, **caractérisée en ce que** le circuit de dérivation est ouvert quand la température de décharge de l'accumulateur de chaleur (54) se situe au-dessous de la température de vaporisation du médium de travail.

8. Unité de propulsion selon l'une des revendications précédentes, **caractérisée en ce que** le premier dispositif d'échange de chaleur comprend un premier échangeur de chaleur (20) et un deuxième échangeur de chaleur (26), ainsi qu'un circuit intermédiaire (22) avec un médium de transfert, selon laquelle l'énergie thermique est transférée depuis le gaz d'échappement vers le médium de transfert, dans le premier échangeur de chaleur (20), et l'énergie thermique est transférée depuis le médium de transfert vers le médium de travail, dans le deuxième échangeur de chaleur (26).

9. Unité de propulsion selon la revendication 8, **caractérisée en ce que** l'accumulateur de chaleur (54) est intégré dans le circuit intermédiaire (22).

10. Unité de propulsion selon l'une des revendications précédentes, **caractérisée en ce qu'**une commande du transfert de chaleur a lieu sur le mécanisme de processus cyclique, en fonction du profil de conduite pronostiqué.
